# EUROPÄISCHE PATENTANMELDUNG

(11) **EP 1 854 572 A1**
(43) Veröffentlichungstag der Anmeldung: **14.11.2007**
(21) Anmeldenummer: 07106859.7
(22) Anmeldetag: 24.04.2007
(51) Int. Cl.: B23B 51/02, B28D 1/14, E21B 10/44

(54) **Hartstoffbohrkopf**

(30) Priorität: 10.05.2006 DE 102006000221
(71) Anmelder: HILTI Aktiengesellschaft, 9494 Schaan (LI)
(72) Erfinder: Koch, Olaf, 86916 Kaufering (DE); Hofmann, Karl-Heinz, 86947 Weil (DE)
(74) Vertreter: Wildi, Roland

(57) **Zusammenfassung**

Ein Vollhartstoffkopf (1) für ein um eine Drehachse (A) in einer Drehrichtung ([omega]) angetriebenes Schlagbohrwerkzeug mit zumindest einer Hauptschneide (3) mit einer Hauptschneidkante (4) sowie mit zumindest einer umlaufend zur Hauptschneide (3) versetzten Nebenschneide (5) mit einer Nebenschneidkante (6), die zumindest stückweise in Form eines Kreisbogenabschnitts (7) ausgebildet ist, der radial innen von der Drehachse (A) beabstandet radial schräg ausläuft, wobei die Nebenschneidkante (6) radial aussen zum Kreisbogenabschnitt (7) einen geraden Aussenabschnitt (8) ausbildet, der radial schräg verläuft.

## Beschreibung

### Hartstoffbohrkopf

Die Erfindung bezeichnet einen Hartstoffbohrkopf für ein Schlagbohrwerkzeug, insbesondere Drehschlagbohrer für Gestein im Durchmesserbereich von 4 mm bis 40 mm zur Verwendung mit drehschlagenden Handwerkzeugmaschinen, sowie ein damit bestücktes Schlagbohrwerkzeug.

Üblicherweise sind moderne, hochbeanspruchbare Drehschlagbohrer für Gestein am Schaftende mit einem kompakten Vollhartstoffkopf mit je zwei Haupt- und Nebenschneiden bestückt. Neben der die Hauptschneiden unterstützenden Schneidfunktion dient die Nebenschneide insbesondere einer Verbesserung des Bohrverhaltens bei einem duktilen Armierungseisentreffer. Aufgrund der langen Standzeit moderner Vollhartstoffköpfe wird eine möglichst gleichmässige Bohrleistung über der Nutzungsdauer angestrebt. Insbesondere sollte bei einem neuwertigen Vollhartstoffkopf mit noch sehr scharfen Schneidkanten die Gleitreibung nicht wesentlich höher als im gemittelten Sollnutzungsbereich sein.

Nach der W00108840 ist ein Vollhartstoffbohrkopf mit drei Hauptschneiden bekannt, deren Schneidkanten von aussen nach innen aus einem geraden Aussenabschnitt und einem Kreisbogenabschnitt zusammengesetzt sind, wobei der gerade Aussenabschnitt radial schräg verläuft und der Kreisbogenabschnitt exakt radial in der Bohrerspitze ausläuft.

Nach der DE10117262 ist ein kompakter Vollhartstoffbohrkopf für ein Schlagbohrwerkzeug mit je zwei diametral angeordneten Haupt- und Nebenschneiden bekannt, wobei die den Hauptschneiden (im spitzen Winkel) in Drehrichtung vorlaufenden Nebenschneiden exakt tangential verlaufende Schneidkanten aufweisen. Auf diesen tangential verlaufenden Schneidkanten auflaufende Armierungstreffer sorgen für ein zuverlässiges Abheben des Bohrkopfes bevor sich die Hauptschneiden in das duktile Armierungseisen eingraben und zäh verhaken können.

Nach der EP1604793 ist ein kreuzförmiger Vollhartstoffbohrkopf für ein Schlagbohrwerkzeug mit je zwei diametral angeordneten Haupt- und Nebenschneiden bekannt, wobei letztere eine Nebenschneidkante in Form eines Kreisbogenabschnitts ausbilden, der radial innen von der Drehachse beabstandet ist sowie radial aussen exakt radial verläuft.

Die Aufgabe der Erfindung besteht in der Optimierung eines Vollhartstoffbohrkopfes für ein Schlagbohrwerkzeug langer Standzeit, insbesondere im Hinblick auf verringerte Reibung im neuwertigen Zustand.

Die Aufgabe wird im Wesentlichen durch die Merkmale des Anspruchs 1 gelöst. Vorteilhafte Weiterbildungen ergeben sich aus den Unteransprüchen.

So weist ein Vollhartstoffkopf für ein um eine Drehachse in einer Drehrichtung angetriebenes Schlagbohrwerkzeug zumindest eine Hauptschneide mit einer Hauptschneidkante sowie umlaufend zur Hauptschneide versetzt zumindest eine Nebenschneide mit einer Nebenschneidkante auf, die zumindest stückweise in Form eines Kreisbogenabschnitts ausgebildet ist, der radial innen von der Drehachse beabstandet radial schräg ausläuft, wobei die Nebenschneidkante radial aussen zum Kreisbogenabschnitt einen geraden Aussenabschnitt ausbildet, der radial schräg verläuft.

Durch den radial aussen radial schräg verlaufenden geraden Aussenabschnitt der Nebenschneidkante ist relativ zu einer radial aussen exakt radial verlaufenden Schneidkante deren Gleitreibung wesentlich reduziert. Zudem wird Bohrklein durch die Drehung radial wegtransportiert.

Vorteilhaft endet die Nebenschneidkante radial innen von der Drehachse beabstandet in einer Axialausnehmung, wodurch über die Axialausnehmung eine Verbindung zu einer (in Drehrichtung betrachtet) vor der zugeordneten Hauptscheide angeordneten Abfuhrnut ausgebildet wird, über die anfallendes Bohrklein wegtransportiert wird.

Vorteilhaft bildet die Nebenschneidkante radial innen bis zur Axialausnehmung einen geraden Innenabschnitt aus, wodurch eine vorteilhafte Endschräge über deren Verlauf beibehalten wird.

Vorteilhaft gehen der gerade Aussenabschnitt und der Kreisbogenabschnitt sowie gegebenenfalls der Innenabschnitt der Nebenschneidkante glatt (d.h. ohne Knick) ineinander über, wodurch am Übergang in Drehrichtung betrachtet weder eine lokal zur Verhakung neigende Aussenecke noch eine das Bohrklein anhäufende Innenecke ausgebildet wird.

Vorteilhaft ist der Kreisbogenabschnitt entgegen der Drehrichtung gekrümmt, wodurch der Verlauf der Nebenschneidkante nach radial innen hin eine zunehmend grössere Tangentialkomponente aufweist, an der ein allfälliger Armierungseisentreffer reibungsarm abgleiten kann.

Vorteilhaft ist der gerade Aussenabschnitt und der Kreisbogenabschnitt sowie gegebenenfalls der Innenabschnitt über ihren gesamten Verlauf der Nebenschneidkante nach radial innen hin entgegen der Drehrichtung geneigt, wodurch sich an diesen ansammelndes Bohrklein durch die Drehung nach radial innen wegtransportiert wird.

Vorteilhaft liegt der (in der Axialebene bezüglich der Radialen gemessene) Aussenwinkel des Aussenabschnitts im Bereich von 2° bis 15°, weiter vorteilhaft 5°, woraus sich ein optimales Reibungsverhalten ergibt.

Vorteilhaft liegt der (in der Axialebene bezüglich der zugeordneten Hauptschneidkante gemessene) Endwinkel des Innenabschnitts im Bereich von 60° bis 85°, weiter vorteilhaft 65°, woraus sich weniger Bohrklein zwischen den Schneiden verklemmen kann und dadurch beim Bohren die thermische Belastung sinkt.

Vorteilhaft liegt ein (in der Axialebene bezüglich der zugeordneten Hauptschneidkante gemessenes) Einlaufverhältnis zwischen den Radiallängen der Axialausnehmung und der Hauptschneidkante im Bereich zwischen 0.2 und 0.5, woraus sich ein treffsicheres Anbohren ohne Verlaufen ergibt.

Vorteilhaft liegt der (in der Tangentialebene gemessene) Keilwinkel der Nebenschneide im Bereich von 95° bis 125°, weiter vorteilhaft 110°, woraus sich ein optimales Armierungstrefferverhalten ergibt.

Vorteilhaft ist der Vollhartstoffkopf (in Aufsicht betrachtet im Wesentlichen) rechteckig kompakt mit vier Ecken ausgebildet, wobei jeweils zwei Hauptschneiden und zwei Nebenschneiden alternierend an den Ecken angeordnet sind und die Nebenschneiden in Drehrichtung den Hauptschneiden spitzwinkelig umlaufend vorgelagert sind, woraus sich dieser besonders für Bohrdurchmesser von 4 mm bis 18 mm eignet.

Alternativ vorteilhaft ist der Vollhartstoffkopf (in Aufsicht betrachtet im Wesentlichen) X-förmig mit vier Ecken und zwei Konkavseiten ausgebildet, wobei jeweils zwei Hauptschneiden und zwei Nebenschneiden alternierend an den Ecken angeordnet sind und die Nebenschneiden in Drehrichtung den Hauptschneiden spitzwinkelig umlaufend vorgelagert sind, woraus sich dieser besonders für Bohrdurchmesser von 10 mm bis 40 mm eignet.

Alternativ vorteilhaft ist der Vollhartstoffkopf (in Aufsicht betrachtet im Wesentlichen) kreuzförmig mit vier Ecken und vier Konkavseiten ausgebildet, wobei jeweils zwei Hauptschneiden und zwei Nebenschneiden alternierend an den Ecken angeordnet sind und die Nebenschneiden rechtwinkelig umlaufend zu den Hauptschneiden angeordnet sind, woraus sich dieser bei an den Bohrerschaft angeschweissten Vollhartstoffkopf besonders für Bohrdurchmesser von 4 mm bis 25 mm, bei an den Bohrerschaft angelöteten Vollhartstoffkopf besonders für Bohrdurchmesser von 10 mm bis 40 mm eignet.

Vorteilhaft ist der Vollhartstoffkopf mit einem Schaftende eines Schlagbohrwerkzeugs stoffschlüssig verbunden, weiter vorteilhaft bspw. mit einer Bronze hart verlötet, wodurch ein Schlagbohrwerkzeug mit optimierter Standzeit ausgebildet ist.

Die Erfindung wird bezüglich eines vorteilhaften Ausführungsbeispiels näher erläutert mit:
- Fig. 1: als Schlagbohrwerkzeug in Seitenansicht, gesehen aus Ebene I-I in Fig. 2
- Fig. 2: als Vollhartstoffkopf in Aufsicht
- Fig. 3: als Variante des Vollhartstoffkopfes in Aufsicht
- Fig. 4: als Variante des Vollhartstoffkopfes in Aufsicht

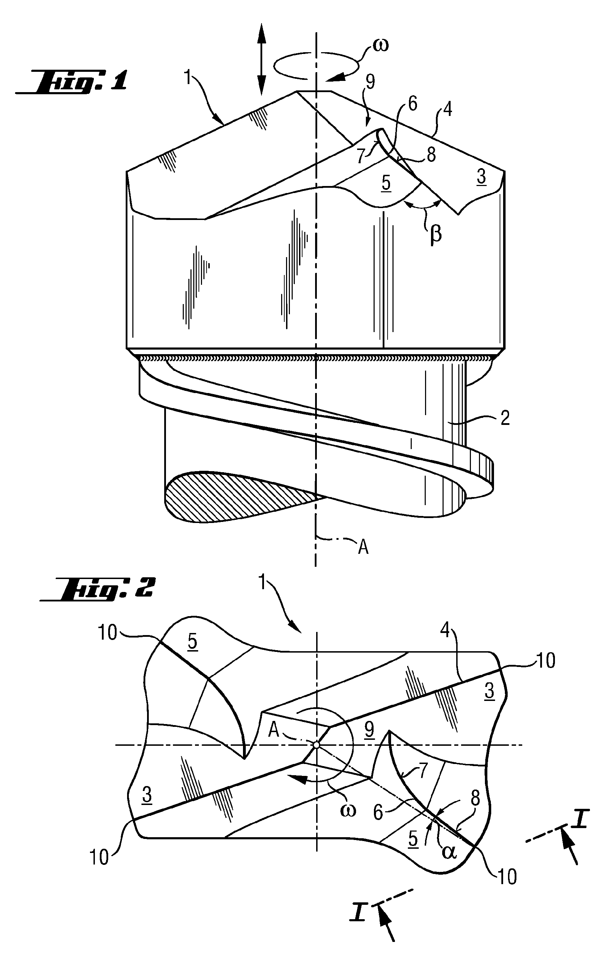

Nach Fig. 1 ist ein Vollhartstoffkopf 1 stumpf auf einem wendelförmigen Schaftende 2 eines drehschlagend um eine Drehachse A mit einer Drehrichtung [omega] angetriebenen Schlagbohrwerkzeugs mit einer Bronze hart verlötet. Der Vollhartstoffkopf 1 weist Hauptschneiden 3 mit je einer Hauptschneidkante 4 sowie umlaufend zur Hauptschneide versetzt Nebenschneiden 5 mit je einer Nebenschneidkante 6 auf. Die Nebenschneidkante 6 ist stückweise in Form eines entgegen der Drehrichtung A gekrümmten Kreisbogenabschnitts 7 ausgebildet, der radial innen von der Drehachse A beabstandet radial schräg ausläuft, wobei die Nebenschneidkante 6 radial aussen zum Kreisbogenabschnitt 7 einen geraden Aussenabschnitt 8 ausbildet, der radial schräg verläuft. Dabei endet die Nebenschneidkante 6 radial innen von der Drehachse A beabstandet in einer Axialausnehmung 9. Der in der Tangentialebene gemessene Keilwinkel [beta] der Nebenschneide 5 beträgt exakt 110°.

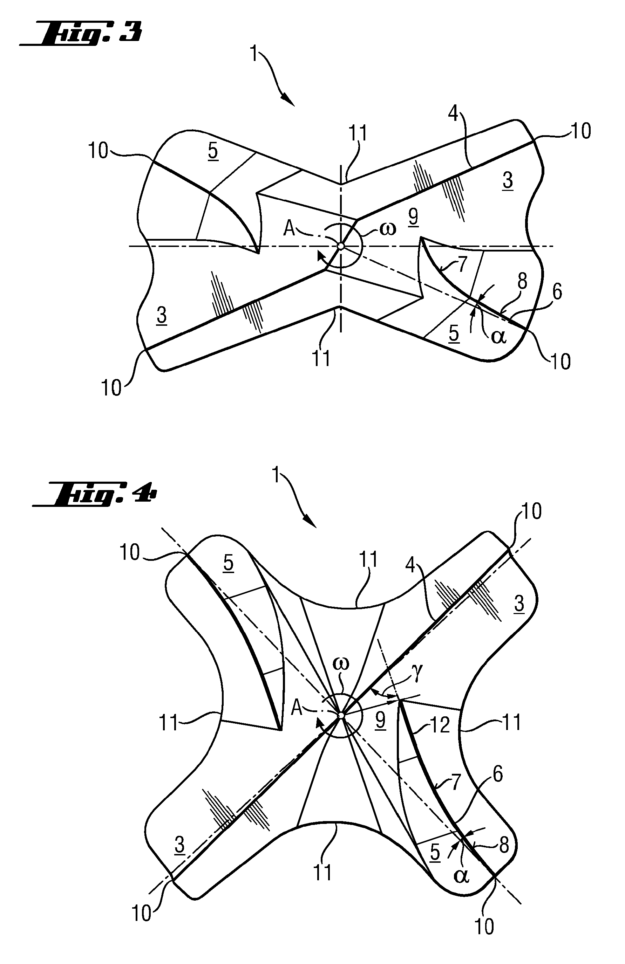

Nach Fig. 2 ist der Vollhartstoffkopf 1 in Aufsicht betrachtet im Wesentlichen rechteckig kompakt mit vier Ecken 10 ausgebildet. Nach Fig. 3 ist alternativ der Vollhartstoffkopf 1 in Aufsicht betrachtet X-förmig im Wesentlichen mit vier Ecken 10 und zwei Konkavseiten 11 ausgebildet. Nach Fig. 4 ist alternativ der Vollhartstoffkopf 1 in Aufsicht betrachtet im Wesentlichen kreuzförmig mit vier Ecken 10 und vier Konkavseiten 11 ausgebildet. In diesen drei Varianten sind jeweils zwei Hauptschneiden 3 und zwei Nebenschneiden 5 alternierend an den Ecken 10 angeordnet. Nach Fig. 2 und Fig. 3 sind jeweils die Nebenschneiden 5 in Drehrichtung [omega] den Hauptschneiden 3 spitzwinkelig umlaufend vorgelagert. Nach Fig. 4 sind die Nebenschneiden 5 jeweils rechtwinkelig zu den Hauptschneiden 3 angeordnet, wobei die Nebenschneidkante 6 radial innen bis zur Axialausnehmung 9 einen geraden Innenabschnitt 12 ausbildet.

Nach den Fig. 2, 3 und 4 gehen im Verlauf der Nebenschneidkante 6 jeweils der gerade Aussenabschnitt 8, der entgegen der Drehrichtung [omega] gekrümmte Kreisbogenabschnitt 7 sowie in Fig. 4 der Innenabschnitt 12 ohne Knick glatt ineinander über und sind über ihren gesamten Verlauf nach radial innen hin entgegen der Drehrichtung [omega] geneigt. Dabei beträgt der in der Axialebene bezüglich der Radialen gemessene Aussenwinkel [alpha] des Aussenabschnitts exakt 5°.

Nach Fig. 4 beträgt der in der Axialebene bezüglich der zugeordneten Hauptschneidkante 4 gemessene Endwinkel [gamma] des Innenabschnitts 12 exakt 65°. Ein in der Axialebene bezüglich der zugeordneten Hauptschneidkante 4 gemessenes Einlaufverhältnis zwischen den Radiallängen der Axialausnehmung 9 und der Hauptschneidkante 4 beträgt 0.25.

## Patentansprüche

1. Vollhartstoffkopf für ein um eine Drehachse (A) in einer Drehrichtung ([omega]) angetriebenes Schlagbohrwerkzeug mit zumindest einer Hauptschneide (3) mit einer Hauptschneidkante (4) sowie mit zumindest einer umlaufend zur Hauptschneide (3) versetzten Nebenschneide (5) mit einer Nebenschneidkante (6), die zumindest stückweise in Form eines Kreisbogenabschnitts (7) ausgebildet ist, der radial innen von der Drehachse (A) beabstandet radial schräg ausläuft, **dadurch gekennzeichnet, dass** die Nebenschneidkante (5) radial aussen zum Kreisbogenabschnitt (7) einen geraden Aussenabschnitt (8) ausbildet, der radial schräg verläuft.

2. Vollhartstoffkopf nach Anspruch 1, **dadurch gekennzeichnet, dass** die Nebenschneidkante (6) radial innen von der Drehachse (A) beabstandet in einer Axialausnehmung (9) endet.

3. Vollhartstoffkopf nach Anspruch 2, **dadurch gekennzeichnet, dass** die Nebenschneidkante (6) radial innen bis zur Axialausnehmung (9) einen geraden Innenabschnitt (12) ausbildet.

4. Vollhartstoffkopf nach einem der Ansprüche 1 bis 3, **dadurch gekennzeichnet, dass** der gerade Aussenabschnitt (8) und der Kreisbogenabschnitt (7) sowie gegebenenfalls der Innenabschnitt (12) der Nebenschneidkante (6) glatt ineinander übergehen.

5. Vollhartstoffkopf nach einem der Ansprüche 1 bis 4, **dadurch gekennzeichnet, dass** der Kreisbogenabschnitt (7) entgegen der Drehrichtung ([omega]) gekrümmt ist.

6. Vollhartstoffkopf nach einem der Ansprüche 1 bis 5, **dadurch gekennzeichnet, dass** der der gerade Aussenabschnitt (8) und der Kreisbogenabschnitt (7) sowie gegebenenfalls der Innenabschnitt (12) über den gesamten Verlauf der Nebenschneidkante (6) nach radial innen hin entgegen der Drehrichtung ([omega]) geneigt ist.

7. Vollhartstoffkopf nach einem der Ansprüche 1 bis 6, **dadurch gekennzeichnet, dass** ein Aussenwinkel ([alpha]) des Aussenabschnitts (8) im Bereich von 2°bis 15° liegt.

8. Vollhartstoffkopf nach einem der Ansprüche 1 bis 7, **dadurch gekennzeichnet, dass** ein Endwinkel ([gamma]) des Innenabschnitts (12) im Bereich von 60° bis 85° liegt.

9. Vollhartstoffkopf nach einem der Ansprüche 1 bis 8, **dadurch gekennzeichnet, dass** ein Einlaufverhältnis zwischen den Radiallängen der Axialausnehmung (9) und der Hauptschneidkante (4) im Bereich zwischen 0.2 und 0.5 liegt.

10. Vollhartstoffkopf nach einem der Ansprüche 1 bis 9, **dadurch gekennzeichnet, dass** ein Keilwinkel ([beta]) der Nebenschneide (5) im Bereich von 95° bis 125 ° liegt.

11. Vollhartstoffkopf nach einem der Ansprüche 1 bis 10, **gekennzeichnet durch** eine rechteckige kompakte Ausbildung mit vier Ecken (10), wobei jeweils zwei Hauptschneiden (3) und zwei Nebenschneiden (5) alternierend an den Ecken (10) angeordnet sind und die Nebenschneiden (5) in Drehrichtung ([omega]) den Hauptschneiden (3) spitzwinkelig umlaufend vorgelagert sind.

12. Vollhartstoffkopf nach einem der Ansprüche 1 bis 10, **gekennzeichnet durch** eine X-förmige Ausbildung mit vier Ecken (10) und zwei Konkavseiten (11), wobei jeweils zwei Hauptschneiden (3) und zwei Nebenschneiden (5) alternierend an den Ecken (10) angeordnet sind und die Nebenschneiden (5) in Drehrichtung ([omega]) den Hauptschneiden (3) spitzwinkelig umlaufend vorgelagert sind.

13. Vollhartstoffkopf nach einem der Ansprüche 1 bis 10, **gekennzeichnet durch** eine kreuzförmige Ausbildung mit vier Ecken (10) und vier Konkavseiten (11), wobei jeweils zwei Hauptschneiden (3) und zwei Nebenschneiden (5) alternierend an den Ecken (10) angeordnet sind und die Nebenschneiden (5) rechtwinkelig umlaufend zu den Hauptschneiden (3) angeordnet sind.

14. Vollhartstoffkopf nach einem der Ansprüche 1 bis 13, **gekennzeichnet durch** eine stoffschlüssige Verbindung mit einem Schaftende (2) des Schlagbohrwerkzeugs.
